# EUROPEAN PATENT SPECIFICATION

(11) **EP 3 857 486 B1**
(45) Date of publication and mention of the grant of the patent: **09.07.2025**
(21) Application number: 19864105.2
(22) Date of filing: 27.09.2019
(51) Int. Cl.: G06Q 20/02, G06Q 20/04, G06Q 20/08, G06Q 20/20, G06Q 20/22, G06Q 20/06, G06Q 20/32, G06Q 20/38, G06Q 20/40

(54) **SYSTEM, METHOD, AND COMPUTER PROGRAM PRODUCT FOR SECURE, REMOTE TRANSACTION AUTHENTICATION AND SETTLEMENT**
SYSTEM, VERFAHREN UND COMPUTERPROGRAMMPRODUKT ZUR SICHEREN ENTFERNTEN TRANSAKTIONSAUTHENTIFIZIERUNG UND -ABRECHNUNG
SYSTÈME, PROCÉDÉ ET PRODUIT PROGRAMME D'ORDINATEUR PERMETTANT UNE AUTHENTIFICATION ET UN RÈGLEMENT DE TRANSACTION À DISTANCE SÉCURISÉS

(30) Priority: 28.09.2018 US 201862737972 P
(43) Date of publication of application: 04.08.2021
(73) Proprietor: Visa International Service Association, San Francisco, California 94128 (US)
(72) Inventor: GADDAM, Sivanarayana, Santa Clara, California 95051 (US); LOKHANDE, Yogesh, Karnataka 562125 (IN); SINHA, Rohit, Fremont, California 94539 (US)
(74) Representative: EIP
(86) International application number: PCT/US2019/053370
(87) International publication number: WO 2020/069262

(56) References cited:
- US-A1- 2005 203 841
- US-A1- 2011 191 253
- US-A1- 2014 101 043
- US-A1- 2014 101 043
- US-A1- 2014 108 252
- US-A1- 2014 108 252

## Description

### CROSS REFERENCE TO RELATED APPLICATION

This application claims priority to U.S. Provisional Patent Application No. 62/737,972, filed September 28, 2018, entitled "System, Method, and Computer Program Product for Secure, Remote Transaction Authentication and Settlement".

### BACKGROUND

### Field

Disclosed embodiments relate generally to transaction authentication and settlement computer networks, and in some non-limiting embodiments or aspects, to a system, method, and computer program product for secured communication via point-to-point encoded signal exchange and remote transaction authentication.

### Technical Considerations

Customer-to-merchant payment, particularly in online marketplaces, can be inconvenient, leading users to abandon their transaction (e.g., "dump" their online shopping cart, exit a store, etc.) prior to completion. There are any number of reasons why users may abandon a transaction prior to completion. For example, a user may discover at checkout that the merchant is requesting them to make an account, sign up for a program, or provide personal information they do not wish to disclose. The user may also find the checkout process to be long and cumbersome, or worse, an electronic checkout process may encounter errors or crash before completion. Also, users may not trust a particular store or website with their credit card information, or the merchant may not accept the payment method of their choosing. Higher rates of transaction completion could be achieved if the underlying issues of security, efficiency, and versatility were addressed, both in brick-and-mortar stores and in e-commerce.

Moreover, from a merchant's perspective, transactions may be subject to fraud. One type of fraud is "friendly fraud," in which a transaction is completed not by the account holder but by someone (e.g., a relation, a friend) inadvertently using the account holder's payment method, such as a credit card that has been previously linked to a user account. Another type of fraud is "identity fraud," in which someone intentionally uses an account holder's payment method to complete a transaction. Fraudulent transactions may result in chargebacks, which further increases time and costs in resolution, especially for the defrauded account holder.

US 2014/0108252 A1 discloses a mobile image payment system that uses sound-based codes.

US 2014/0101043 discloses the facilitation of a payment through sound-based communication.

There is a need in the art for a convenient and secure method of authenticating a paying user at time of checkout without surrendering or revealing personal information to the merchant or third party authenticators.

### SUMMARY

According to a first aspect of the invention there is provided a computer-implemented method, as defined by appended claim 1.

According to a second aspect of the invention there is provided an authentication mediary system, as defined by appended claim 6.

According to a third aspect of the invention there is provided a computer program product, as defined by appended claim 11.

Dependent claims provide further embodiments of the invention.

These and other features and characteristics of non-limiting embodiments, as well as the methods of operation and functions of the related elements of structures and the combination of parts and economies of manufacture, will become more apparent upon consideration of the following description, and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosure. As used in the specification and the claims, the singular forms of "a," "an," and "the" include plural referents unless the context clearly dictates otherwise.

### BRIEF DESCRIPTION OF THE APPENDICES

Additional advantages are explained in greater detail below with reference to the non-limiting embodiments that are illustrated in the accompanying Appendices containing schematics and figures, in which:
FIG. 1 is a schematic diagram of a system and method for secure, remote transaction authentication and settlement;
FIG. 2 is a flow diagram of a system and method for secure, remote transaction authentication and settlement;
FIG. 3 is a process diagram of a system and method for secure, remote transaction authentication and settlement;
FIG. 4 is a process diagram of a system and method for secure, remote transaction authentication and settlement;
FIG. 5 is a process diagram of a system and method for secure, remote transaction authentication and settlement; and
FIG. 6 is a process diagram of a system and method for secure, remote transaction authentication and settlement.

### DETAILED DESCRIPTION

For purposes of the description hereinafter, the terms "upper," "lower," "right," "left," "vertical," "horizontal," "top," "bottom," "lateral," "longitudinal," and derivatives thereof shall relate to the non-limiting embodiments as the embodiments are oriented in the drawing figures. However, it is to be understood that the disclosure may assume various alternative variations and step sequences, except where expressly specified to the contrary. It is also to be understood that the specific devices and processes illustrated in the attached drawings, and described in the following specification, are simply exemplary embodiments. Hence, specific dimensions and other physical characteristics related to the embodiments disclosed herein are not to be considered as limiting. Also, it should be understood that any numerical range recited herein is intended to include all sub-ranges subsumed therein. For example, a range of 1 to 10 is intended to include all sub-ranges between (and including) the recited minimum value of 1 and the recited maximum value of 10, that is, having a minimum value equal to or greater than 1 and a maximum value of equal to or less than 10.

As used herein, the terms "communication" and "communicate" refer to the receipt or transfer of one or more signals, messages, commands, or other type of data. For one unit (e.g., any device, system, or component thereof) to be in communication with another unit means that the one unit is able to directly or indirectly receive data from and/or transmit data to the other unit. This may refer to a direct or indirect connection that is wired and/or wireless in nature. Additionally, two units may be in communication with each other even though the data transmitted may be modified, processed, relayed, and/or routed between the first and second unit. For example, a first unit may be in communication with a second unit even though the first unit passively receives data and does not actively transmit data to the second unit. As another example, a first unit may be in communication with a second unit if an intermediary unit processes data from one unit and transmits processed data to the second unit.

As used herein, the term "transaction service provider" may refer to an entity that receives transaction authorization requests from merchants or other entities and provides guarantees of payment, in some cases through an agreement between the transaction service provider and an issuer institution. The terms "transaction service provider" and "transaction service provider system" may also refer to one or more computer systems operated by or on behalf of a transaction service provider, such as a transaction processing server executing one or more software applications. A transaction processing server may include one or more processors and, in some non-limiting embodiments, may be operated by or on behalf of a transaction service provider.

As used herein, the term "issuer institution" may refer to one or more entities, such as a bank, that provide accounts to customers for conducting payment transactions, such as initiating credit and/or debit payments. For example, an issuer institution may provide an account identifier, such as a personal account number (PAN), to a customer that uniquely identifies one or more accounts associated with that customer. The account identifier may be embodied on a physical transaction instrument, such as a payment card, and/or may be electronic and used for electronic payments. The terms "issuer institution," "issuer bank," and "issuer system" may also refer to one or more computer systems operated by or on behalf of an issuer institution, such as a server computer executing one or more software applications. For example, an issuer system may include one or more authorization servers for authorizing a payment transaction.

As used herein, the term "acquirer institution" may refer to an entity licensed by the transaction service provider and approved by the transaction service provider to originate transactions using a portable financial device of the transaction service provider. The transactions may include original credit transactions (OCTs) and account funding transactions (AFTs). The acquirer institution may be authorized by the transaction service provider to originate transactions using a portable financial device of the transaction service provider. The acquirer institution may contract with a payment gateway to enable the facilitators to sponsor merchants. An acquirer institution may be a financial institution, such as a bank. The terms "acquirer institution," "acquirer bank," and "acquirer system" may also refer to one or more computer systems operated by or on behalf of an acquirer institution, such as a server computer executing one or more software applications.

As used herein, the term "account identifier" may include one or more PANs, tokens, or other identifiers associated with a customer account. The term "token" may refer to an identifier that is used as a substitute or replacement identifier for an original account identifier, such as a PAN. Account identifiers may be alphanumeric or any combination of characters and/or symbols. Tokens may be associated with a PAN or other original account identifier in one or more databases, such that the tokens can be used to conduct a transaction without directly using the original account identifier. In some examples, an original account identifier, such as a PAN, may be associated with a plurality of tokens for different individuals or purposes. An issuer institution may be associated with a bank identification number (BIN) or other unique identifier that uniquely identifies the issuer institution among other issuer institutions.

As used herein, the term "merchant" may refer to an individual or entity that provides goods and/or services, or access to goods and/or services, to customers based on a transaction, such as a payment transaction. The term "merchant" or "merchant system" may also refer to one or more computer systems operated by or on behalf of a merchant, such as a server computer executing one or more software applications. The term "point-of-sale system" or "POS system", as used herein, may refer to one or more computers and/or peripheral devices used by a merchant to engage in payment transactions with customers, including one or more card readers, near-field communication (NFC) receivers, radio-frequency identification (RFID) receivers, and/or other contactless transceivers or receivers, contact-based receivers, payment terminals, computers, servers, input devices, and/or other like devices that can be used to initiate a payment transaction. A POS terminal may be located proximal to a user, such as at a physical store location, or a POS terminal may be remote from the user, such as a server interacting with a user browsing on their personal computer.

As used herein, the term "mobile device" may refer to one or more portable electronic devices configured to communicate with one or more networks. As an example, a mobile device may include a cellular phone (e.g., a smartphone or standard cellular phone), a portable computer (e.g., a tablet computer, a laptop computer, etc.), a wearable device (e.g., a watch, pair of glasses, lens, clothing, and/or the like), a personal digital assistant (PDA), and/or other like devices. The term "client device," as used herein, refers to any electronic device that is configured to communicate with one or more servers or remote devices and/or systems. A client device may include a mobile device, a network-enabled appliance (e.g., a network-enabled television, refrigerator, thermostat, and/or the like), a computer, a POS system, and/or any other device or system capable of communicating with a network.

As used herein, the term "payment device" may refer to a portable payment card (e.g., a credit or debit card), a gift card, a smartcard, smart media, a payroll card, a healthcare card, a wristband, a machine-readable medium containing account information, a keychain device or fob, an RFID transponder, a retailer discount or loyalty card, a mobile device executing an electronic wallet application, a personal digital assistant, a security card, an access card, a wireless terminal, and/or a transponder, as examples. The payment device may include a volatile or a nonvolatile memory to store information, such as an account identifier or a name of the account holder. The payment device may store account credentials locally on the device, in digital or non-digital representation, or may facilitate accessing account credentials stored in a medium that is accessible by the payment device in a connected network.

As used herein, the term "server" may refer to or include one or more processors or computers, storage devices, or similar computer arrangements that are operated by or facilitate communication and processing for multiple parties in a network environment, such as the internet. In some non-limiting embodiments, communication may be facilitated over one or more public or private network environments and that various other arrangements are possible. Further, multiple computers, e.g., servers, or other computerized devices, e.g., POS devices, directly or indirectly communicating in the network environment may constitute a system, such as a merchant's POS system. Reference to a server or a processor, as used herein, may refer to a previously-recited server and/or processor that is recited as performing a previous step or function, a different server and/or processor, and/or a combination of servers and/or processors. For example, as used in the specification and the claims, a first server and/or a first processor that is recited as performing a first step or function may refer to the same or different server and/or a processor recited as performing a second step or function.

The term "account data," as used herein, refers to any data concerning one or more accounts for one or more users. Account data may include, for example, one or more account identifiers, user identifiers, transaction histories, balances, credit limits, issuer institution identifiers, and/or the like.

In non-limiting embodiments or aspects, the described systems and methods improve upon existing systems by providing a secure method of authenticating a paying user at the time of checkout without surrendering or revealing personal information to the merchant or third party authenticators. In this way, payment data privacy may be maintained for both brick-and-mortar store POS terminals and online POS terminals (e.g., electronic marketplaces). Furthermore, non-limiting embodiments reduce instances of both "friendly" fraud (e.g., inadvertent use of someone's payment device) and identity fraud (e.g., intentional use of someone's payment device) by adding an additional layer of authentication. Moreover, by using a payment device holder's mobile device to sample their environment (e.g., record audio, record images, record video, etc.) when completing payment authentication, the environmental sample can be used to verify the location of the payment device holder at the time of payment. The described new systems and methods prevent unauthorized payments, which further prevents often-resulting chargebacks, fraud investigation, account lockdown, digital audits, and/or the like, in addition to reducing the use of computing resources, and, therefore, increasing the speed of the system, resulting from processing such chargebacks, lockdowns, and audits.

At a high level, the present disclosure enhances a checkout transaction experience and performs second factor authentication transparently. The present disclosure improves the checkout experience by addressing common issues in the transaction process, removing need for account registration, reducing time of checkout process, minimizing errors by minimizing checkout codes, reducing exposure of payment information or personal information to merchants, and maximizing available payment methods by allowing various mobile applications to complete a transaction. The present disclosure further eliminates the integration burden on merchants. Moreover, the present disclosure makes use of two important features, FatToken and AuthChain, which are described in further technical detail below, followed by detailed description of the systems and methods.

### FatToken

FatToken contains encrypted identity attributes, payment credentials, and authentication policies configured by an issuer. An issuer fetches cipher credentials, including user demographics, billing address, and payment credentials upon user authentication request and encrypts said data against the issuer's public key. The issuer provides a pre-configured list of re-encryption keys using payment gateways, such that only payment gateways can decrypt the cipher credentials. The issuer configures the list of authentication policies, such as dynamic authentication, white listed or black listed merchant category codes, amount limit checks, and proximity/background checks before re-encrypting the cipher credentials against the merchant-associated-gateway's re-encryption key. A computing device binds the cipher credentials, public re-encryption keys, and authenticating policies against the computing device (or an application thereon) to prevent skimming attacks on FatToken. The cipher credentials, public re-encryption keys, and authentication policies may be digitally signed with an issuer's private key or a private key of an authentication mediary system (e.g., one or more servers for provisioning and validating token keys, in part).

### AuthChain

AuthChain is a blockchain-based system, where any node can perform authentication and log a transaction on behalf of an issuer. Each node may have a Software Guard Extensions (SGX) enabled processor for the efficient and confidential execution of authentication algorithms. AuthChain contains the following building blocks: blockchain node, FatToken, route, authentication policy checker, and audit (log proof).

For the blockchain node, each issuer provisions the SGX node with the following enclaves: enroll, route, authentication policy checker, and audit. The issuer invokes the enroll enclave by inputting a digital signature, public key, and audit public key. The enroll enclave verifies the public key and the signature. The enroll enclave creates a new audit key pair and returns the audit public key to the issuer. The issuer signs the audit public key and returns it to the enroll enclave. The enroll enclave establishes a secure connection with the audit enclave and shares the issuer-signed audit public key and secret key. For the route enclave, each node in the network inspects the request and routes the request to other nodes if not configured to process FatToken from a particular issuer based on the issuer's public key. The authentication policy checker enclave receives FatToken and metadata (e.g., device attributes, behavioral attributes, etc.) as input, executes authentication policies, invokes the audit enclave for logging, and returns re-encrypted cipher credentials and proof of authentication. The audit enclave receives authentication proof from the authentication policy checker enclave and contacts all other audit enclaves to commit the authentication proof to blockchain.

### Workflows

The present described system has the following phases: on-boarding, setup, and commerce. On-boarding and setup are explained in the present section in further detail.

For on-boarding, payment gateways and issuers communicate with the authentication mediary system and provision keys using proxy-re-encryption. First, a payment gateway runs a key generation procedure and outputs the payment gateway's public/secret keys (GWₚₖ / GWₛₖ). Next, the payment gateway publishes its public key (GWₚₖ, Sign_{GWsk}(GWₚₖ)) to the authentication mediary system (e.g., one or more servers for provisioning and validating token keys, in part). The authentication mediary system (AMS) validates the gateway public key (GWₚₖ) and stores the public key (AMS_Signₛₖ(GWₚₖ)) by signing using the authentication mediary system's secret key. Next, an issuer contacts the authentication mediary system and fetches all payment gateway public keys (< AMS_Signₛₖ(GWₚₖ₁), AMS_Signₛₖ(GWₚₖ₂), ... AMS_Signₛₖ(GWₚₖₙ) >) to generate re-encryption keys. Next, an issuer runs a key generation procedure and outputs its issuer public/secret keys (Issuerₚₖ / Issuerₛₖ). Next, an issuer filters the payment gateway public keys and invokes key regeneration for each public key. Next, an issuer runs a key regeneration procedure by inputting payment gateway public key (GWₚₖ) and issuer's secret key (Issuerₛₖ), outputting PK_{Issuer→GW} for each payment gateway. Next, an issuer publishes the re-encrypted keys (< PK_{Issuer→GW1}, PK_{Issuer→GW2}, ... PK_{Issuer→GWn} >) with the authentication mediary system. The authentication mediary system stores (e.g., persists) re-encryption keys from all issuers.

Issuers participate in the AuthChain by adding the SGX-enabled node to the network, interacting with the enroll enclave to start processing transactions. Issuers follow the following procedure to participate in the AuthChain blockchain network. First, an issuer sets up keys as described in on-boarding, above. Next, an issuer authenticates with the authentication mediary system (AMS) via a digital signature and downloads the blockchain software. The issuer provisions the SGX-enabled node, installing the blockchain software. Next, the issuer adds the node to the AuthChain blockchain network. The issuer sends certificate Issuerₚₖ and AMS_Signₛₖ(Issuisrₚₖ) to enroll the node for processing transactions. The issuer validates the certificate and generates an audit key pair (Auditₚₖ / Auditₛₖ). Next, the issuer validates the audit public key by verifying the signature. Issuer signs the audit public key after validating it and sends the audit public key to the enroll enclave. The enroll enclave shares audit keys with the audit enclave and finishes the enrollment of the issuer node. Now, the issuer node is ready to execute authentication policies.

Issuers may integrate their mobile applications with a mobile device software development kit (SDK) to help users provision FatToken, link with other partner applications (e.g., social media applications, electronic marketplaces, etc.), and transact with merchants. A mobile device SDK may offer the following functionalities: provision, application links, and commerce. Provision allows users to provision FatToken and store the token in local memory. Application links allows users to choose a list of mobile applications for choice of checkout. Commerce allows users to view a shopping cart and confirm/deny checkout.

Partners (e.g., social media providers, electronic marketplaces, etc.) may integrate their mobile applications with a mobile device SDK to help customers checkout efficiently. A mobile device SDK may offer the following functionalities: application links and commerce. Application links enable users to configure their default provider or select a provider during checkout. Commerce allows users to view their shopping cart and confirm/deny checkout. A user may not be allowed to provision a FatToken from a partner application.

For setup, both users and merchants may follow a one-time setup procedure. Users perform the following steps to configure their payment system. First, a user may install an issuer mobile application. Next, the user may authenticate themselves to the issuer mobile application via credentials (e.g., biometrics, knowledge-based check, etc.). The user may enable participation in the present system by clicking on a toggle button. Next, the mobile device SDK sends a request to an issuer backend service to provision FatToken. The mobile device SDK fetches a list of re-encryption keys (< PK_{Issuer→GW1}, PK_{Issuer→GW2}, ... PK_{Issuer→GWn} >). The mobile device SDK creates FatToken by assembling encrypted user credentials, authentication policies, and re-encryption keys. Next, the mobile device SDK sends FatToken to the authentication mediary system for signing the token. The authentication mediary system signs the FatToken using a secret key and sends the signed FatToken as a response (AMS_Signₛₖ(FT)). The mobile device SDK receives the signed FatToken and stores the signed FatToken locally. Next, the user receives a FatToken-provisioning success message.

A merchant conducts a one-time setup, based on the following steps, to deploy the present system on an e-commerce website of the merchant. First, a merchant selects an appropriate payment gateway and sends a request to the authentication mediary system for a script (e.g., Javascript) library. The authentication mediary system stores a merchant and/or gateway URL in a database and prepares a checkout script library. Next, the merchant downloads the script library to enable the present system for checkouts. The merchant deploys the script library in the e-commerce website. The deployed script library provides both legacy checkout and checkout provided by the presently described system. A similar process may be executed for a POS terminal of a physical storefront.

Once on-boarding and setup procedures are complete, a commerce procedure may be executed in the presently described system. Further details are described below in the context of the drawings.

### Systems and Methods

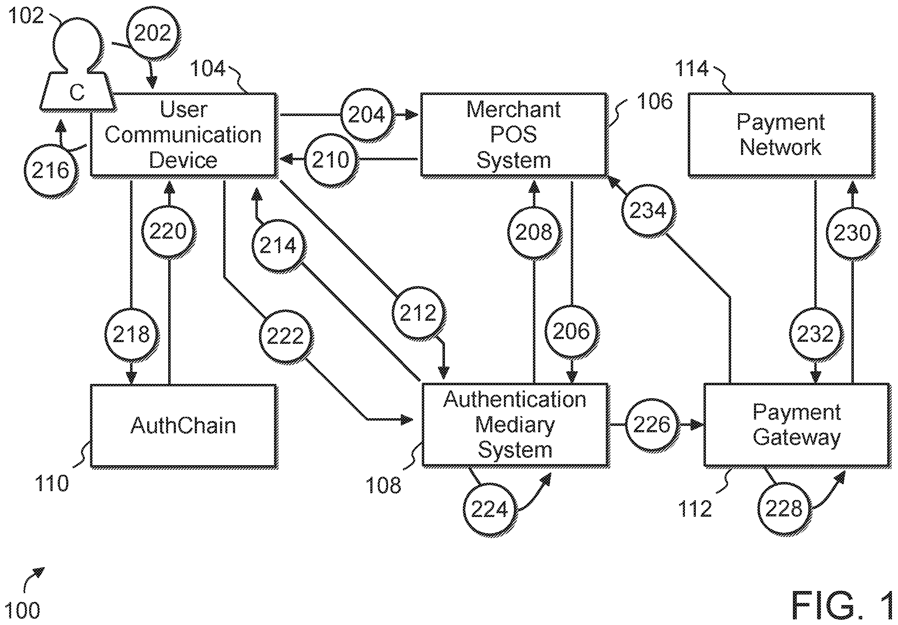

With specific reference to FIG. 1, and in preferred non-limiting embodiments or aspects, provided is a system 100 for secure, remote transaction authentication and settlement. The system 100 includes a customer 102 associated with a user communication device 104, which may be a payment device (e.g., a mobile device). The user communication device 104 may include an audio input device (e.g., microphone) and/or a visual input device (e.g., a camera). The system 100 further includes a merchant POS system 106, which may include a merchant communication device and a merchant POS terminal. The merchant communication device may be the same device as a merchant POS terminal (e.g., a mobile device, a countertop computing device). The POS terminal may include an audio output device (e.g., speaker) and/or a visual output device (e.g., display). The system 100 further includes an authentication mediary system 108, e.g., one or more servers for provisioning and validating token keys, at least in part. The user communication device 104 may be operating a mobile application using a software development kit (SDK) of an authentication mediary system 108. The system 100 further includes AuthChain 110, e.g., a blockchain-based system where any node can perform authentication on behalf of an issuer and log transactions accordingly. The system 100 further includes a payment gateway 112 and a payment network 114, e.g., including a transaction service provider system, an acquirer processor, and/or the like.

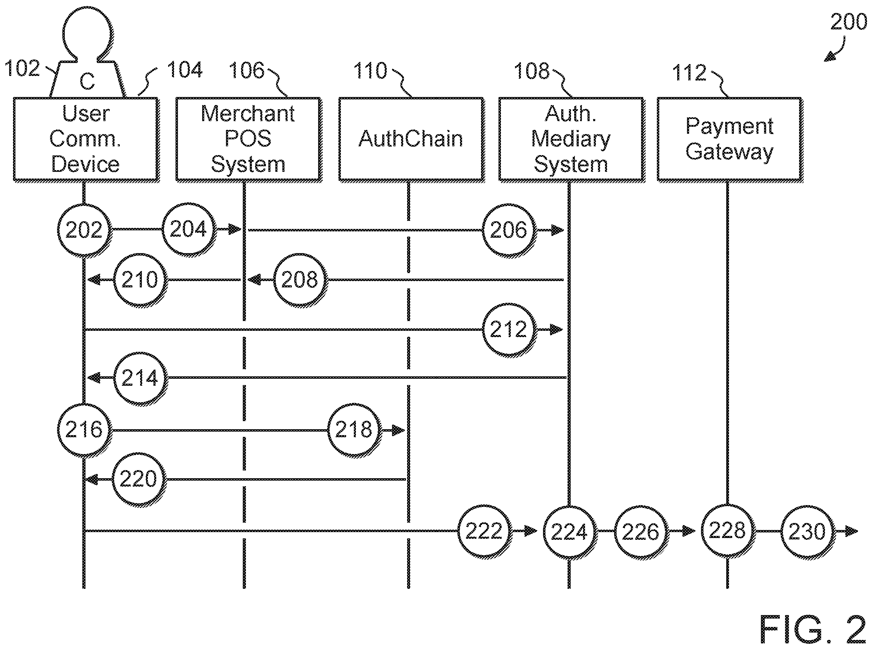

With specific reference to FIGS. 1 and 2, and in preferred non-limiting embodiments or aspects, provided is a system 100 and method 200 for secure, remote transaction authentication and settlement. In step 202, a customer 102 launches an enabled mobile device application and authenticates himself via a form of credentials, e.g., passcode, biometrics (e.g., fingerprint, facial scan, etc.), user name and password, and/or the like. In step 204, the customer 102 may go to a merchant (e.g., physically, electronically) and select items (e.g., goods, services, etc.) for purchase. The customer 102 may be interacting with an online store through which items are added to a virtual shopping cart. The customer 102 may also be interacting with a physical store in which items are collected for purchase. The customer 102 may also scan in-store objects with the user communication device 104 to create a purchase list. Also in step 204, the merchant POS system is provided with the list of one or more items for purchase by the customer 102.

In step 206, the merchant POS system 106 communicates transaction data of the items to be purchased to an authentication mediary system 108. Transaction data may include, but is not limited to, a transaction cost, a transaction description, a transaction time, a merchant identifier, or any combination thereof. In response to receiving the transaction data, the authentication mediary system 108 may communicate a unique identifier representative of the transaction to the merchant POS system 106, in step 208. The authentication mediary system 108 may generate sound data encoding the unique identifier, e.g., an audio QR code, and communicate the sound data to the merchant POS system 106. Alternatively, the merchant POS system 106 may encode the received unique identifier into sound data. In some non-limiting embodiments or aspects, any form of audio or visual signal data may be used to encode the unique identifier, including audio QR code, visual QR code, barcode, and/or the like. The authentication mediary system 108 may store the unique identifier in a database in association with the transaction data.

In step 210, the merchant may present the signal data, e.g., sound data, for detection by the user communication device. In the case of sound data, the POS terminal (e.g., a website, a physical checkout device, etc.) may emit a sound wave (e.g., a musical tone, a voice emulation, an ultra- or infra-sonic tone, etc.) based on the sound data, where the sound wave is a carrier for the embedded/encoded unique identifier (e.g., frequency modulation). In the case of visual signal data, the POS terminal (e.g., a website, a physical checkout device, etc.) may display a visual pattern or code (e.g., a visual QR code, a barcode, alphanumeric code, etc.) based on the signal data, where the visual pattern or code is a carrier for the embedded/encoded unique identifier. Further in step 210, the user communication device 104 may detect the signal data, e.g., sound data, and decode the unique identifier. In step 212, the user communication device 104 may communicate the unique identifier to the authentication mediary system 108.

In step 214, the authentication mediary system 108 may compare the received unique identifier to stored unique identifiers and retrieve stored transaction data associated with the received unique identifier. Further in step 214, the authentication mediary system 108 may communicate at least a portion of the transaction data to the user communication device 102. In step 216, the customer 102 may then review the transaction data and confirm that the items they intended to purchase are reflected in transaction data. The customer 102 may input a confirmation to the user communication device 104. In step 218, the user communication device 104 may retrieve FatToken and other metadata (e.g., device attributes, behavioral attributes, etc.) and communicate the aforesaid to AuthChain 110. AuthChain 110 may receive FatToken and other metadata, execute authentication policies, log the computation, and re-encrypt FatToken against the public key of the payment gateway 112. The user communication device 104 may receive the re-encrypted FatToken from AuthChain 110 in step 220.

In step 222, the user communication device 104 may communicate the re-encrypted FatToken and proof of authentication to the authentication mediary system 108. In step 224, the authentication mediary system 108 may verify the proof of authentication. In step 226, the authentication mediary system 108 may communicate the re-encrypted FatToken to the payment gateway 112 with transaction data. In step 228, the payment gateway 112 may decrypt the FatToken using the private key of the payment gateway 112. Based on the FatToken and transaction data, the payment gateway 112 may send a transaction request to the payment network 114 for authorization in step 230. In step 232, the payment network 114 may authorize or decline the transaction request, and the payment gateway 112 may receive a communication of the authorization or decline. In step 234, the payment gateway 112 may communication a message to the merchant POS system 106 reporting the authorization or the decline.

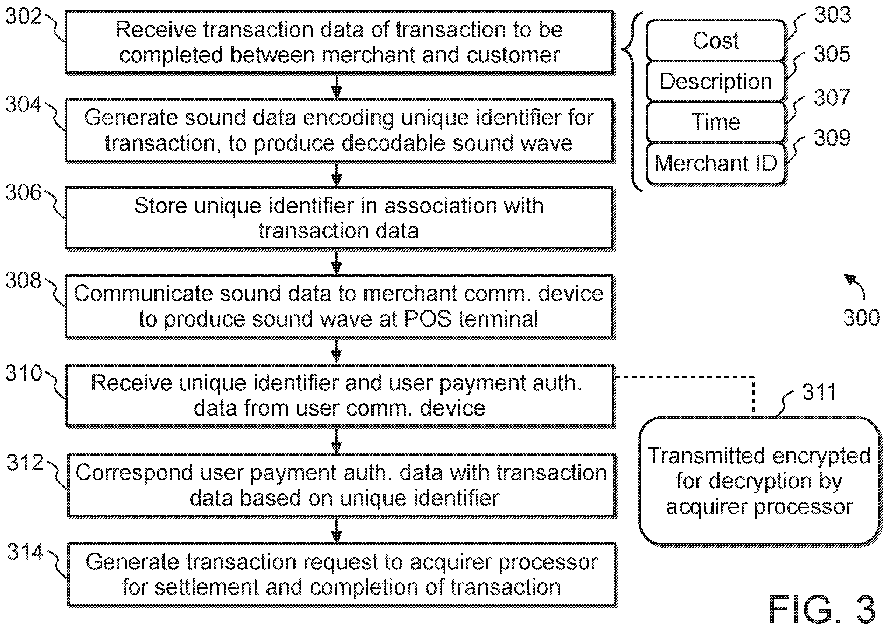

With specific reference to FIG. 3, and in preferred non-limiting embodiments or aspects, provided is a method 300 for secure, remote transaction authentication and settlement. The method 300 may be carried out by one or more computing devices, including those of the authentication mediary system, merchant POS system, payment gateway, another computing device, or a combination thereof. In step 302, the authentication mediary system receives, from a merchant device, transaction data associated with a transaction to be completed between a merchant and a customer via a merchant POS system, including a POS terminal. The transaction data may include, but is not limited to, a transaction cost 303, a transaction description 305, a transaction time 307, a merchant identifier 309, or any combination thereof. In step 304, the authentication mediary system may generate a unique identifier and sound data encoding the unique identifier. The sound data may be configured to cause an audio output device (e.g., speaker) to produce a sound wave such that, when the sound wave is received by an audio input device (e.g., microphone), the sound wave is decodable to provide the unique identifier.

In step 306, the authentication mediary system may store the unique identifier in one or more databases in association with the transaction data. In step 308, the authentication mediary system may communicate the sound data to the merchant communication device (e.g., associated with a merchant POS system) to cause the sound wave to be produced at the POS terminal for receipt and decoding by a user communication device of the customer. Alternatively, the unique identifier may be communicated to the merchant POS system for generation of sound data by the merchant POS system. For a POS terminal that includes a customer-facing online store, the sound wave may be produced on a user device accessing the online store. For a POS terminal of a physical merchant store, the sound wave may be produced on an audio output device of the POS terminal. After the user communication device decodes the unique identifier from the sound wave, the authentication mediary system may receive, in step 310, the unique identifier from the user communication device. In a same or separate communication, in step 310, the authentication mediary system may receive user payment authorization data (e.g., including an account identifier associated with a customer transaction account).

In step 312, the authentication mediary system may correspond, based on the unique identifier received from the user communication device, the user payment authorization data with the transaction data. The user payment authorization data may be encrypted as received from the user communication device, in step 311, and be configured for decryption by a payment gateway and/or acquirer processor. The user payment authorization data may be formatted and encrypted according to a predetermined ruleset input by the payment gateway and/or acquirer processor (e.g., via a portal having an application programming interface). In step 314, the authentication mediary system may generate, or cause a payment gateway to generate, a transaction request to an acquirer processor associated with a merchant transaction account. The transaction request may include the user payment authorization data and the transaction data for settlement of payment from the customer transaction account to the merchant transaction account for completion of the transaction.

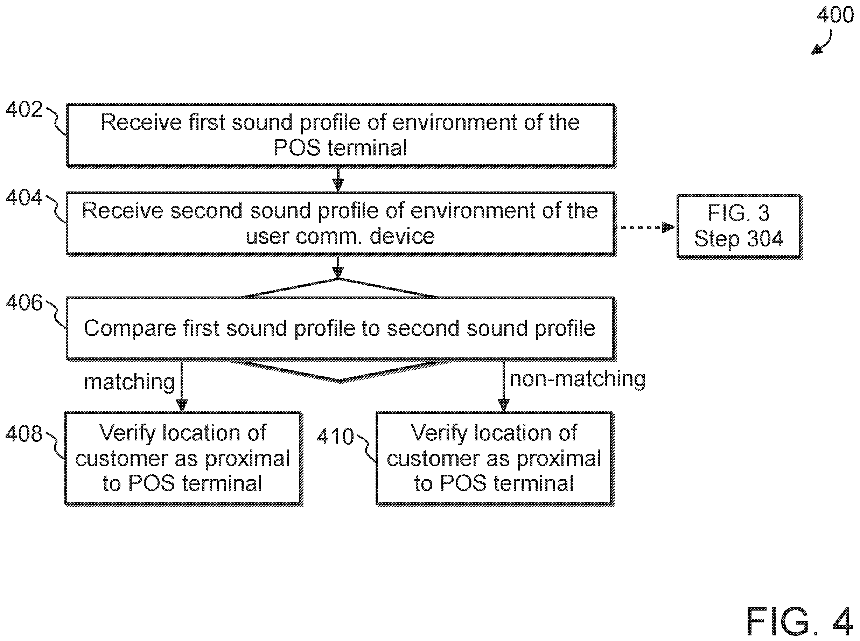

With specific reference to FIG. 4, and in further non-limiting embodiments or aspects, provided is a method 400 for secure, remote transaction authentication and settlement. As with the foregoing method, method 400 may be carried out by one or more computing devices, including those of the authentication mediary system, merchant POS system, payment gateway, another computing device, or a combination thereof. In step 402, the authentication mediary system may receive, from the merchant communication device, a first sound profile (e.g., an audio recording) of an environment of the POS terminal (e.g., a physical merchant store, a space near a computing device hosting an online store website, etc.). In step 404, the authentication mediary system may receive, from the user communication device, a second sound profile (e.g., an audio recording) of an environment of the user communication device (e.g., a physical merchant store, a space near a computing device hosting an online store website, etc.). In step 406, the authentication mediary system may compare the first sound profile to the second sound profile and determine if the sound profiles match (e.g., determine a likelihood of match, determine a percent match, etc.). In doing so, it may be determined if the user communication device (presumed to be near the customer) is in the same environment as the POS terminal.

If the first sound profile and the second sound profile are determined to be matching, or sufficiently matching, in step 406, then the authentication mediary system may verify that the location of the customer is proximal to the POS terminal, in step 408. If the first sound profile and the second sound profile are determined to not match, or not to sufficiently match, in step 406, then the authentication mediary system may reject a verification that the location of the customer is proximal to the POS terminal, in step 410. It will further be appreciated that based on a second sound profile received in step 404, the authentication mediary system may determine a frequency range of the sound wave (during generation of the sound data in step 304 of FIG. 3) that is non-overlapping with a frequency range of a portion of the second sound profile associated with the environment of the user communication device, so as to increase the likelihood and accuracy of the user communication device detecting the sound wave in the environment of the user communication device.

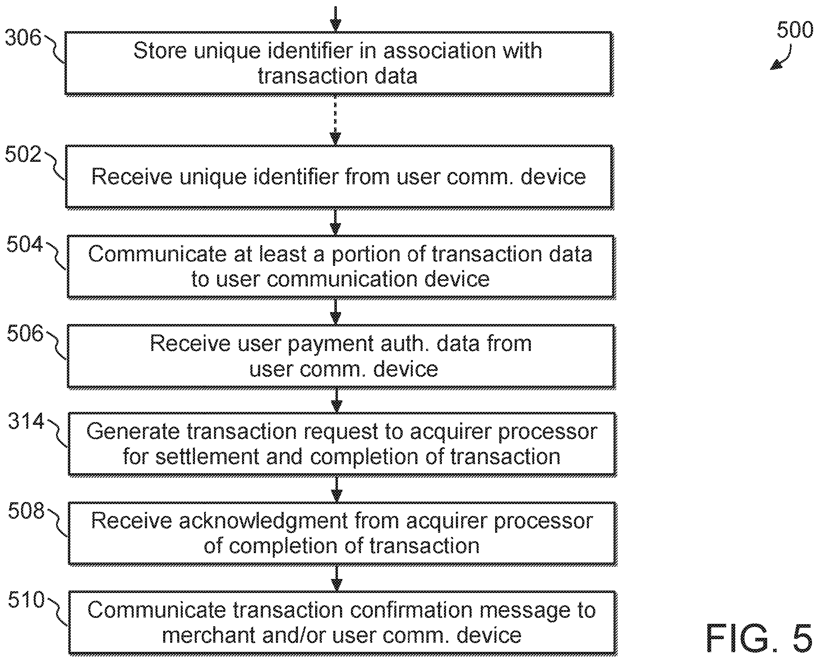

With specific reference to FIG. 5, and in non-limiting embodiments or aspects, provided is a method 500 for secure, remote transaction authentication and settlement. As with the foregoing methods, method 500 may be carried out by one or more computing devices, including those of the authentication mediary system, merchant POS system, payment gateway, another computing device, or a combination thereof. In step 306, the authentication mediary system may store the unique identifier in association with the transaction data. In step 502, the authentication mediary system may receive the unique identifier from the user communication device, which has received the unique identifier via encoding in a signal (e.g., audio, visual, etc.) from the POS terminal. Before the customer commits to a purchase, the customer may wish to view the list of items of the transaction associated with the unique identifier. Therefore, in step 504, the authentication mediary system may communicate at least a portion of the transaction data to the user communication device prior to receiving the user payment authorization data from the user communication device. The customer may then review the transaction data and confirm or reject the purchase using their user communication device. If the purchase is confirmed and authorized by the customer, then, in step 506, the authentication mediary system may receive user payment authorization data from the user communication device.

In step 314, the authentication mediary system may generate a transaction request, or cause a payment gateway to generate a transaction request, to an acquirer processor associated with a merchant transaction account (or other payment network device), so as to settle payment from the customer transaction account to the merchant transaction account for completion of the transaction. In step 508, the authentication mediary system and/or a payment gateway may receive acknowledgement from an acquirer processor (or other payment network device) of completion of the transaction. In response to step 508, the authentication mediary system and/or the payment gateway may communicate, in step 510, a transaction confirmation message to the merchant communication device and/or the user communication device.

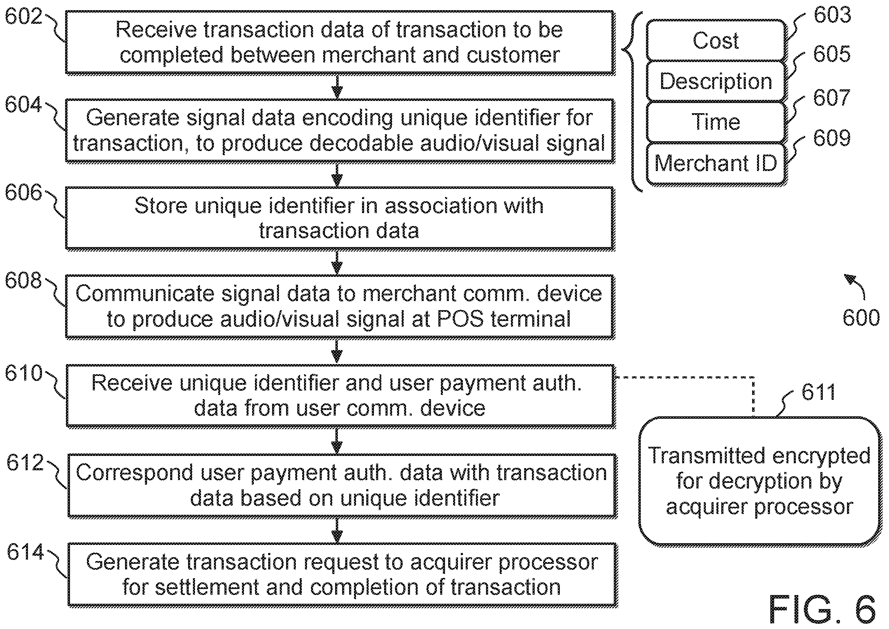

With specific reference to FIG. 6, and in non-limiting embodiments or aspects, provided is a method 600 for secure, remote transaction authentication and settlement. As with the foregoing methods, method 600 may be carried out by one or more computing devices, including those of the authentication mediary system, merchant POS system, payment gateway, another computing device, or a combination thereof. In step 602, the authentication mediary system may receive, from a merchant communication device, transaction data associated with a transaction to be completed between a merchant and a customer via a POS terminal. The transaction data may include a transaction cost 603, a transaction description 605, a transaction time 607, a merchant identifier 609, or any combination thereof. In step 604, the authentication mediary system may generate a unique identifier for the transaction, and may further generate signal data encoding the unique identifier. The merchant POS system may alternatively generate signal data to encode the unique identifier. The signal data may be configured to cause an audio output device (e.g., speaker) and/or visual output device (e.g., display) to produce an audio signal (e.g., audio QR code) and/or visual signal (e.g., visual QR code), respectively. When the audio signal or visual signal is received by an audio input device (e.g., microphone) and/or visual input device (e.g., camera), the audio signal and/or the visual signal may be decodable to provide the unique identifier.

In step 606, the authentication mediary system may store the unique identifier in association with the transaction data. In step 608, the authentication mediary system may communicate the signal data to the merchant communication device to cause the audio signal and/or the visual signal to be produced at the POS terminal for receipt and decoding by a user communication device of the customer. In step 610, the authentication mediary system may receive, from the user communication device, the unique identifier and user payment authorization data, in a same or separate message. The user payment authorization data may include at least an account identifier associated with a customer transaction account. The user payment authorization data may be transmitted encrypted, in step 611, for decryption by the acquirer processor, payment gateway, or another payment network device. In step 612, the authentication mediary system may correspond the user payment authorization data with the transaction data based on the unique identifier. In step 614, the authentication mediary system may generate, or cause a payment gateway to generate, a transaction request to an acquirer processor associated with a merchant transaction account (or other payment network device). The transaction request may include the user payment authorization data and the transaction data, for settlement of payment from the customer transaction account to the merchant transaction account for completion of the transaction.

Although non-limiting embodiments have been described in detail for the purpose of illustration based on what is currently considered to be the most practical and preferred and non-limiting embodiments, it is to be understood that such detail is solely for that purpose and that the disclosure is not limited to the disclosed embodiments but, on the contrary, is intended to cover modifications and equivalent arrangements that are within the scope of the appended claims. For example, it is to be understood that the present disclosure contemplates that, to the extent possible, one or more features of any embodiment can be combined with one or more features of any other embodiment.

## Claims

1. A computer-implemented method for secure, remote transaction authentication and settlement, the method comprising:
receiving (302), by at least one processor of an authentication mediary system (108), and from a merchant point-of-sale, POS, system (106) associated with a merchant, transaction data associated with a transaction to be completed between the merchant and a customer via a POS terminal of the merchant POS system, the transaction data comprising at least one of the following: a transaction cost; a transaction description; a transaction time; a merchant identifier; or any combination thereof;
generating (304), by the at least one processor, (i) a unique identifier representative of the transaction and (ii) any form of audio signal data encoding the unique identifier;
storing (306), by the at least one processor and in at least one database, the unique identifier in association with the transaction data;
communicating (308), by the at least one processor, the signal data to the merchant POS system, wherein the POS terminal is configured, based on the signal data, to cause an audio output device of the POS terminal to produce an audio signal such that, when the audio signal is received by an audio input device of a user communication device (104) of the customer, the audio signal is decoded by the user communication device to provide the unique identifier;
receiving (310), by the at least one processor and from the user communication device, (i) the unique identifier representative of the transaction and (ii) user payment authorization data comprising at least an account identifier associated with a customer transaction account;
corresponding (312), by the at least one processor, the user payment authorization data with the stored transaction data associated with the transaction based on the unique identifier received from the user communication device;
generating (314), by the at least one processor, a transaction request, the transaction request comprising the user payment authorization data and the transaction data; and
transmitting, by the at least one processor, the transaction request to an acquirer processor associated with a merchant transaction account of the merchant for settlement of payment from the customer transaction account to the merchant transaction account for completion of the transaction;
wherein the method further comprises:
receiving (402), by the at least one processor of the authentication mediary system (108) and from a merchant communication device of the merchant POS system (106), a first sound profile of a physical environment of the POS terminal of the merchant POS system;
receiving (404), by the at least one processor and from the user communication device (104), a second sound profile of a physical environment of the user communication device, the second sound profile recorded during receipt of the audio signal, in the form of a sound wave, by the user communication device from the POS terminal; and
verifying (408), by the at least one processor, a location of the user communication device as proximal to the POS terminal based on a comparison, by the at least one processor, of the first sound profile to the second sound profile.

2. The computer-implemented method of claim 1, further comprising:
receiving, by the at least one processor of the authentication mediary system (108) and from the user communication device (104), the user payment authorization data in an encrypted form; and
transmitting, by the at least one processor and to the acquirer processor, the user payment authorization data in said encrypted form, said user payment authorization data being configured for decryption by the acquirer processor.

3. The computer-implemented method of claim 1, wherein the signal data comprises sound data configured to cause an audio output device of the POS terminal to produce a sound wave, the method further comprising determining, by the at least one processor of the authentication mediary system (108), that a frequency range of the sound wave is non-overlapping with a frequency range of a portion of the second sound profile of the physical environment of the user communication device (104).

4. The computer-implemented method of any of claims 1 to 3, further comprising, in response to the at least one processor of the authentication mediary system (108) receiving the unique identifier from the user communication device (104), communicating, by the at least one processor, at least a portion of the transaction data to the user communication device prior to the at least one processor receiving the user payment authorization data from the user communication device.

5. The computer-implemented method of any of claims 1 to 4, further comprising, in response to the at least one processor of the authentication mediary system (108) receiving an acknowledgment from the acquirer processor of the transaction being completed pursuant to the transaction request, communicating, by the at least one processor, a transaction confirmation message to the merchant communication device of the merchant POS system (106) and/or the user communication device (104).

6. An authentication mediary system (108) comprising at least one server computer including at least one processor, the at least one server computer programmed and/or configured to:
receive, from a merchant point-of-sale, POS, system (106) associated with a merchant, transaction data associated with a transaction to be completed between the merchant and a customer via a POS terminal of the merchant POS system, the transaction data comprising at least one of the following: a transaction cost; a transaction description; a transaction time; a merchant identifier; or any combination thereof;
generate (i) a unique identifier representative of the transaction and (ii) any form of audio signal data encoding the unique identifier;
store, in at least one database, the unique identifier in association with the transaction data;
communicate the signal data to the merchant POS system, wherein the POS terminal is configured, based on the signal data, to cause an audio output device of the POS terminal to produce an audio signal such that, when the audio signal is received by an audio input device of a user communication device (104) of the customer, the audio signal is decoded by the user communication device to provide the unique identifier;
receive, from the user communication device, (i) the unique identifier representative of the transaction and (ii) user payment authorization data comprising at least an account identifier associated with a customer transaction account;
correspond the user payment authorization data with the stored transaction data associated with the transaction based on the unique identifier received from the user communication device;
generate a transaction request, the transaction request comprising the user payment authorization data and the transaction data; and
transmit the transaction request to an acquirer processor associated with a merchant transaction account of the merchant for settlement of payment from the customer transaction account to the merchant transaction account for completion of the transaction;
wherein the at least one server computer is further programmed and/or configured to:
receive, from a merchant communication device of the merchant POS system (106), a first sound profile of a physical environment of the POS terminal of the merchant POS system;
receive, from the user communication device (104), a second sound profile of a physical environment of the user communication device, the second sound profile recorded during receipt of the audio signal, in the form of a sound wave, by the user communication device from the POS terminal; and
verify a location of the user communication device as proximal to the POS terminal based on a comparison of the first sound profile to the second sound profile.

7. The system of claim 6, wherein the at least one server computer is further programmed and/or configured to:
receive, from the user communication device (104), the user payment authorization data in an encrypted form; and
transmit, to the acquirer processor, the user payment authorization data in said encrypted form, said user payment authorization data being configured for decryption by the acquirer processor.

8. The system of claim 6, wherein the signal data comprises sound data configured to cause an audio output device of the POS terminal to produce a sound wave, wherein the at least one server computer is further programmed and/or configured to determine that a frequency range of the sound wave is non-overlapping with a frequency range of a portion of the second sound profile of the physical environment of the user communication device (104).

9. The system of any of claims 6 to 8, wherein the at least one server computer is further programmed and/or configured to, in response to receiving the unique identifier from the user communication device (104), communicate at least a portion of the transaction data to the user communication device prior to receiving the user payment authorization data from the user communication device.

10. The system of any of claims 6 to 9, wherein the at least one server computer is further programmed and/or configured to, in response to receiving an acknowledgment from the acquirer processor of the transaction being completed pursuant to the transaction request, communicate a transaction confirmation message to the merchant communication device of the merchant POS system (106) and/or the user communication device (104).

11. A computer program product for secure, remote transaction authentication and settlement, the computer program product comprising at least one non-transitory computer-readable medium including program instructions that, when executed by at least one processor of an authentication mediary system (108), cause the at least one processor to perform the method of any of claims 1 to 5.

## Patentansprüche

1. Computerimplementiertes Verfahren zur sicheren Authentifizierung und Abwicklung einer Ferntransaktion, das Verfahren umfassend:
Empfangen (302), durch mindestens einen Prozessor eines Vermittlungssystems zur Authentifizierung (108), und von einem Händler-Point-of-Sale(POS)-System (106), das einem Händler zugeordnet ist, von Transaktionsdaten, die einer Transaktion zugeordnet sind, die zwischen dem Händler und einem Kunden über ein POS-Terminal des Händler-POS-Systems abgeschlossen werden soll, wobei die Transaktionsdaten mindestens eines der Folgenden umfassen: Transaktionskosten; eine Transaktionsbeschreibung; eine Transaktionszeit; eine Händlerkennung; oder eine Kombination davon;
Erzeugen (304), durch den mindestens einen Prozessor, (i) einer eindeutigen Kennung, die für die Transaktion repräsentativ ist, und (ii) irgendeiner Form von Audiosignaldaten, die die eindeutige Kennung codieren;
Speichern (306), durch den mindestens einen Prozessor und in mindestens einer Datenbank, der eindeutigen Kennung in Verbindung mit den Transaktionsdaten;
Kommunizieren (308), durch den mindestens einen Prozessor, der Signaldaten an das Händler-POS-System, wobei das POS-Terminal konfiguriert ist, basierend auf den Signaldaten, um eine Audioausgabevorrichtung des POS-Terminals zu veranlassen, ein Audiosignal zu erzeugen, sodass, wenn das Audiosignal durch eine Audioeingabevorrichtung einer Benutzerkommunikationsvorrichtung (104) des Kunden empfangen wird, das Audiosignal durch die Benutzerkommunikationsvorrichtung dekodiert wird, um die eindeutige Kennung bereitzustellen;
Empfangen (310) durch den mindestens einen Prozessor und von der Benutzerkommunikationsvorrichtung, (i) der eindeutigen Kennung, die für die Transaktion repräsentativ ist, und (ii) von Zahlungsautorisierungsdaten des Benutzers, die mindestens eine Kontokennung umfassen, die einem Kundentransaktionskonto zugeordnet ist;
Korrespondieren (312), durch den mindestens einen Prozessor, der Zahlungsautorisierungsdaten des Benutzers mit den gespeicherten Transaktionsdaten, die der Transaktion zugeordnet sind, basierend auf der eindeutigen Kennung, die von der Benutzerkommunikationsvorrichtung empfangen wird;
Erzeugen (314), durch den mindestens einen Prozessor, einer Transaktionsanforderung, wobei die Transaktionsanforderung die Zahlungsautorisierungsdaten des Benutzers und die Transaktionsdaten umfasst; und
Übertragen, durch den mindestens einen Prozessor, der Transaktionsanforderung an einen Acquirer-Prozessor, der einem Händlertransaktionskonto des Händlers zugeordnet ist, für die Abwicklung der Zahlung von dem Kundentransaktionskonto an das Händlertransaktionskonto für den Abschluss der Transaktion;
wobei das Verfahren ferner umfasst:
Empfangen (402), durch den mindestens einen Prozessor des Vermittlungssystems zur Authentifizierung (108) und von einer Händlerkommunikationsvorrichtung des Händler-POS-Systems (106), eines ersten Klangprofils einer physischen Umgebung des POS-Terminals des Händler-POS-Systems;
Empfangen (404), durch den mindestens einen Prozessor und von der Benutzerkommunikationsvorrichtung (104), eines zweiten Klangprofils einer physischen Umgebung der Benutzerkommunikationsvorrichtung, wobei das zweite Klangprofil während des Empfangs des Audiosignals, in Form einer Schallwelle, durch die Benutzerkommunikationsvorrichtung von dem POS-Terminal aufgezeichnet wird; und
Verifizieren (408), durch den mindestens einen Prozessor, eines Standorts der Benutzerkommunikationsvorrichtung als proximal zu dem POS-Terminal, basierend auf einem Vergleich, durch den mindestens einen Prozessor, des ersten Klangprofils mit dem zweiten Klangprofil.

2. Computerimplementiertes Verfahren nach Anspruch 1, ferner umfassend:
Empfangen, durch den mindestens einen Prozessor des Vermittlungssystems zur Authentifizierung (108) und von der Benutzerkommunikationsvorrichtung (104), der Zahlungsautorisierungsdaten des Benutzers in einer verschlüsselten Form; und
Übertragen, durch den mindestens einen Prozessor und an den Acquirer-Prozessor, der Zahlungsautorisierungsdaten des Benutzers in der verschlüsselten Form, wobei die Zahlungsautorisierungsdaten des Benutzers zur Entschlüsselung durch den Acquirer-Prozessor konfiguriert sind.

3. Computerimplementiertes Verfahren nach Anspruch 1, wobei die Signaldaten Schalldaten umfassen, die so konfiguriert sind, dass sie eine Audioausgabevorrichtung des POS-Terminals veranlassen, eine Schallwelle zu erzeugen, wobei das Verfahren ferner das Bestimmen, durch den mindestens einen Prozessor des Vermittlungssystems zur Authentifizierung (108), umfasst, dass ein Frequenzbereich der Schallwelle nicht mit einem Frequenzbereich eines Abschnitts des zweiten Klangprofils der physischen Umgebung der Benutzerkommunikationsvorrichtung (104) überlappt.

4. Computerimplementiertes Verfahren nach einem der Ansprüche 1 bis 3, ferner umfassend, als Reaktion darauf, dass der mindestens eine Prozessor des Vermittlungssystems zur Authentifizierung (108) die eindeutige Kennung von der Benutzerkommunikationsvorrichtung (104) empfängt, Kommunizieren, durch den mindestens einen Prozessor, mindestens eines Abschnitts der Transaktionsdaten an die Benutzerkommunikationsvorrichtung, bevor der mindestens eine Prozessor die Zahlungsautorisierungsdaten des Benutzers von der Benutzerkommunikationsvorrichtung empfängt.

5. Computerimplementiertes Verfahren nach einem der Ansprüche 1 bis 4, ferner umfassend, als Reaktion darauf, dass der mindestens eine Prozessor des Vermittlungssystems zur Authentifizierung (108) eine Bestätigung von dem Acquirer-Prozessor empfängt, dass die Transaktion gemäß der Transaktionsanforderung abgeschlossen ist, Kommunizieren, durch den mindestens einen Prozessor, einer Transaktionsbestätigungsnachricht an die Händlerkommunikationsvorrichtung des Händler-POS-Systems (106) und/oder die Benutzerkommunikationsvorrichtung (104).

6. Vermittlungssystem zur Authentifizierung (108), umfassend mindestens einen Server-Computer, der mindestens einen Prozessor beinhaltet, wobei der mindestens eine Server-Computer programmiert und/oder konfiguriert ist zum:
Empfangen, von einem Händler-Point-of-Sale(POS)-System (106), das einem Händler zugeordnet ist, von Transaktionsdaten, die einer Transaktion zugeordnet sind, die zwischen dem Händler und einem Kunden über ein POS-Terminal des Händler-POS-Systems abgeschlossen werden soll, wobei die Transaktionsdaten mindestens eines der Folgenden umfassen: Transaktionskosten; eine Transaktionsbeschreibung; eine Transaktionszeit; eine Händlerkennung; oder eine Kombination davon;
Erzeugen (i) einer eindeutigen Kennung, die für die Transaktion repräsentativ ist, und (ii) irgendeiner Form von Audiosignaldaten, die die eindeutige Kennung codieren;
Speichern, in mindestens einer Datenbank, der eindeutigen Kennung in Verbindung mit den Transaktionsdaten;
Kommunizieren der Signaldaten an das Händler-POS-System, wobei das POS-Terminal konfiguriert ist, basierend auf den Signaldaten, um eine Audioausgabevorrichtung des POS-Terminals zu veranlassen, ein Audiosignal zu erzeugen, sodass, wenn das Audiosignal durch eine Audioeingabevorrichtung einer Benutzerkommunikationsvorrichtung (104) des Kunden empfangen wird, das Audiosignal durch die Benutzerkommunikationsvorrichtung dekodiert wird, um die eindeutige Kennung bereitzustellen;
Empfangen, von der Benutzerkommunikationsvorrichtung, (i) der eindeutigen Kennung, die für die Transaktion repräsentativ ist, und (ii) von Zahlungsautorisierungsdaten des Benutzers, die mindestens eine Kontokennung umfassen, die einem Kundentransaktionskonto zugeordnet ist;
Korrespondieren der Zahlungsautorisierungsdaten des Benutzers mit den gespeicherten Transaktionsdaten, die der Transaktion zugeordnet sind, basierend auf der eindeutigen Kennung, die von der Benutzerkommunikationsvorrichtung empfangen wird;
Erzeugen einer Transaktionsanforderung, wobei die Transaktionsanforderung die Zahlungsautorisierungsdaten des Benutzers und die Transaktionsdaten umfasst; und
Übertragen der Transaktionsanforderung an einen Acquirer-Prozessor, der einem Händlertransaktionskonto des Händlers zugeordnet ist, für die Abwicklung der Zahlung von dem Kundentransaktionskonto an das Händlertransaktionskonto für den Abschluss der Transaktion;
wobei der mindestens eine Server-Computer programmiert und/oder konfiguriert ist zum:
Empfangen, von einer Händlerkommunikationsvorrichtung des Händler-POS-Systems (106), eines ersten Klangprofils einer physischen Umgebung des POS-Terminals des Händler-POS-Systems;
Empfangen, von der Benutzerkommunikationsvorrichtung (104), eines zweiten Klangprofils einer physischen Umgebung der Benutzerkommunikationsvorrichtung, wobei das zweite Klangprofil während des Empfangs des Audiosignals, in Form einer Schallwelle, durch die Benutzerkommunikationsvorrichtung von dem POS-Terminal aufgezeichnet wird; und
Verifizieren eines Standorts der Benutzerkommunikationsvorrichtung als proximal zu dem POS-Terminal, basierend auf einem Vergleich des ersten Klangprofils mit dem zweiten Klangprofil.

7. System nach Anspruch 6, wobei der mindestens eine Server-Computer ferner programmiert und/oder konfiguriert ist zum:
Empfangen, von der Benutzerkommunikationsvorrichtung (104), der Zahlungsautorisierungsdaten des Benutzers in einer verschlüsselten Form; und
Übertragen, an den Acquirer-Prozessor, der Zahlungsautorisierungsdaten des Benutzers in der verschlüsselten Form, wobei die Zahlungsautorisierungsdaten des Benutzers zur Entschlüsselung durch den Acquirer-Prozessor konfiguriert sind.

8. System nach Anspruch 6, wobei die Signaldaten Schalldaten umfassen, die konfiguriert sind, dass sie eine Audioausgabevorrichtung des POS-Terminals veranlassen, eine Schallwelle zu erzeugen, wobei der zumindest eine Server-Computer ferner programmiert und/oder konfiguriert ist, um zu bestimmen, dass ein Frequenzbereich der Schallwelle nicht mit einem Frequenzbereich eines Abschnitts des zweiten Klangprofils der physischen Umgebung der Benutzerkommunikationsvorrichtung (104) überlappt.

9. System nach einem der Ansprüche 6 bis 8, wobei der mindestens eine Server-Computer ferner programmiert und/oder konfiguriert ist, um als Reaktion auf den Empfang der eindeutigen Kennung von der Benutzerkommunikationsvorrichtung (104), mindestens einen Abschnitt der Transaktionsdaten an die Benutzerkommunikationsvorrichtung vor dem Empfang der Zahlungsautorisierungsdaten des Benutzers von der Benutzerkommunikationsvorrichtung zu kommunizieren.

10. System nach einem der Ansprüche 6 bis 9, wobei der mindestens eine Server-Computer ferner programmiert und/oder konfiguriert ist, um als Reaktion auf den Empfang einer Bestätigung von dem Acquirer-Prozessor der Transaktion, die gemäß der Transaktionsanforderung abgeschlossen ist, eine Transaktionsbestätigungsnachricht an die Händlerkommunikationsvorrichtung des Händler-POS-Systems (106) und/oder die Benutzerkommunikationsvorrichtung (104) zu kommunizieren.

11. Computerprogrammprodukt zur sicheren Authentifizierung und Abwicklung einer Ferntransaktion, wobei das Computerprogrammprodukt mindestens ein nichtflüchtiges computerlesbares Medium umfasst, das Programmanweisungen beinhaltet, die bei Ausführung durch mindestens einen Prozessor des Vermittlungssystems zur Authentifizierung (108) den mindestens einen Prozessor veranlassen, das Verfahren nach einem der Ansprüche 1 bis 5 durchzuführen.

## Revendications

1. Procédé mis en œuvre par ordinateur pour une authentification et un règlement de transaction à distance sécurisés, le procédé comprenant :
la réception (302), par l'au moins un processeur d'un système de médiation d'authentification (108), et à partir d'un système de point de vente de commerçant, POS, (106) associé à un commerçant, de données de transaction associées à une transaction à réaliser entre le commerçant et un client par l'intermédiaire d'un terminal POS du système de point de vente de commerçant, les données de transaction comprenant l'au moins un des éléments suivants : un coût de transaction ; une transaction de description ; un temps de transaction ; un identifiant de commerçant ; ou toute combinaison de ceux-ci ;
la génération (304), par l'au moins un processeur, (i) d'un identifiant unique représentatif de la transaction et (ii) de toute forme de données de signal audio codant l'identifiant unique ;
le stockage (306), par l'au moins un processeur et dans l'au moins une base de données, de l'identifiant unique en association avec les données de transaction ;
la communication (308), par l'au moins un processeur, des données de signal au système POS commerçant, dans lequel le terminal POS est configuré, sur la base des données de signal, pour amener un dispositif de sortie audio du terminal POS à produire un signal audio de sorte que, lorsque le signal audio est reçu par un dispositif d'entrée audio d'un dispositif de communication utilisateur (104) du client, le signal audio est décodé par le dispositif de communication utilisateur pour fournir l'identifiant unique ;
la réception (310), par l'au moins un processeur et depuis le dispositif de communication utilisateur, (i) de l'identifiant unique représentatif de la transaction et (ii) des données d'autorisation de paiement utilisateur comprenant l'au moins un identifiant de compte associé à un compte de transaction client ;
la correspondance (312), par l'au moins un processeur, des données d'autorisation de paiement d'utilisateur avec les données de transaction stockées associées à la transaction sur la base de l'identifiant unique reçu du dispositif de communication d'utilisateur ;
la génération (314), par l'au moins un processeur, d'une demande de transaction, la demande de transaction comprenant les données d'autorisation de paiement d'utilisateur et les données de transaction ; et
la transmission, par l'au moins un processeur, de la demande de transaction à un processeur acquéreur associé à un compte de transaction de commerçant du commerçant pour le règlement du paiement depuis le compte de transaction de client vers le compte de transaction de commerçant pour l'achèvement de la transaction ;
dans lequel le procédé comprend en outre :
la réception (402), par l'au moins un processeur du système médiaire d'authentification (108) et à partir d'un dispositif de communication de commerçant du système de point de vente de commerçant (106), d'un premier profil sonore d'un environnement physique du terminal de point de vente du système de point de vente de commerçant ;
la réception (404), par l'au moins un processeur et depuis le dispositif de communication utilisateur (104), d'un deuxième profil sonore d'un environnement physique du dispositif de communication utilisateur, le deuxième profil sonore étant enregistré pendant la réception du signal audio, sous la forme d'une onde sonore, par le dispositif de communication utilisateur depuis le terminal POS ; et
la vérification (408), par l'au moins un processeur, d'un emplacement du dispositif de communication utilisateur comme étant proximal au terminal POS sur la base d'une comparaison, par l'au moins un processeur, du premier profil sonore au deuxième profil sonore.

2. Procédé mis en œuvre par ordinateur selon la revendication 1, comprenant en outre :
la réception, par l'au moins un processeur du système médiaire d'authentification (108) et à partir du dispositif de communication d'utilisateur (104), des données d'autorisation de paiement d'utilisateur sous une forme cryptée ; et
la transmission, par l'au moins un processeur et au processeur acquéreur, des données d'autorisation de paiement d'utilisateur dans ladite forme cryptée, lesdites données d'autorisation de paiement d'utilisateur étant configurées pour un décryptage par le processeur acquéreur.

3. Procédé mis en oeuvre par ordinateur selon la revendication 1, dans lequel les données de signal comprennent des données sonores configurées pour amener un dispositif de sortie audio du terminal POS à produire une onde sonore, le procédé comprenant en outre la détermination, par l'au moins un processeur du système médiateur d'authentification (108), qu'une plage de fréquences de l'onde sonore ne se chevauche pas avec une plage de fréquences d'une partie du deuxième profil sonore de l'environnement physique du dispositif de communication utilisateur (104).

4. Procédé mis en oeuvre par ordinateur selon l'une quelconque des revendications 1 à 3, comprenant en outre, en réponse à la réception par l'au moins un processeur du système médiaire d'authentification (108) de l'identifiant unique provenant du dispositif de communication d'utilisateur (104), la communication, par l'au moins un processeur, de l'au moins une partie des données de transaction au dispositif de communication d'utilisateur avant la réception par l'au moins un processeur des données d'autorisation de paiement d'utilisateur provenant du dispositif de communication d'utilisateur.

5. Procédé mis en oeuvre par ordinateur selon l'une quelconque des revendications 1 à 4, comprenant en outre, en réponse au fait que l'au moins un processeur du système médiateur d'authentification (108) reçoit un accusé de réception du processeur acquéreur de la transaction qui est achevée conformément à la demande de transaction, la communication, par l'au moins un processeur, d'un message de confirmation de transaction au dispositif de communication commerçant du système POS commerçant (106) et/ou au dispositif de communication d'utilisateur (104).

6. Système médiateur d'authentification (108) comprenant l'au moins un ordinateur serveur comprenant l'au moins un processeur, l'au moins un ordinateur serveur étant programmé et/ou configuré pour :
recevoir, à partir d'un système de point de vente de commerçant, POS, (106) associé à un commerçant, des données de transaction associées à une transaction à réaliser entre le commerçant et un client par l'intermédiaire d'un terminal POS du système de point de vente de commerçant, les données de transaction comprenant l'au moins un des éléments suivants : un coût de transaction ; une transaction de description ; un temps de transaction ; un identifiant de commerçant ; ou toute combinaison de ceux-ci ;
générer un identifiant unique représentatif de la transaction et (ii) toute forme de données de signal audio codant l'identifiant unique ;
stocker, dans l'au moins une base de données, l'identifiant unique en association avec les données de transaction ;
communiquer les données de signal au système POS marchand, dans lequel le terminal POS est configuré, sur la base des données de signal, pour amener un dispositif de sortie audio du terminal POS à produire un signal audio de sorte que, lorsque le signal audio est reçu par un dispositif d'entrée audio d'un dispositif de communication utilisateur (104) du client, le signal audio est décodé par le dispositif de communication utilisateur pour fournir l'identifiant unique ;
recevoir, depuis le dispositif de communication utilisateur, (i) l'identifiant unique représentatif de la transaction et (ii) les données d'autorisation de paiement utilisateur comprenant l'au moins un identifiant de compte associé à un compte de transaction client ;
faire correspondre les données d'autorisation de paiement d'utilisateur avec les données de transaction stockées associées à la transaction sur la base de l'identifiant unique reçu du dispositif de communication d'utilisateur ;
générer une demande de transaction, la demande de transaction comprenant les données d'autorisation de paiement de l'utilisateur et les données de transaction ; et
transmettre la demande de transaction à un processeur acquéreur associé à un compte de transaction du commerçant pour le règlement du paiement du compte de transaction du client au compte de transaction du commerçant pour l'achèvement de la transaction ;
dans lequel l'au moins un ordinateur serveur est en outre programmé et/ou configuré pour :
recevoir, depuis un dispositif de communication de commerçant du système de point de vente de commerçant (106), un premier profil sonore d'un environnement physique du terminal de point de vente du système de point de vente de commerçant ;
recevoir, à partir du dispositif de communication utilisateur (104), d'un deuxième profil sonore d'un environnement physique du dispositif de communication utilisateur, le deuxième profil sonore étant enregistré pendant la réception du signal audio, sous la forme d'une onde sonore, par le dispositif de communication utilisateur à partir du terminal POS ; et
vérifier un emplacement du dispositif de communication utilisateur comme étant proximal au terminal POS sur la base d'une comparaison du premier profil sonore au deuxième profil sonore.

7. Système selon la revendication **6,** dans lequel l'au moins un ordinateur serveur est en outre programmé et/ou configuré pour :
recevoir, à partir du dispositif de communication d'utilisateur (104), les données d'autorisation de paiement d'utilisateur sous une forme cryptée ; et
transmettre, au processeur acquéreur, les données d'autorisation de paiement d'utilisateur dans ladite forme cryptée, lesdites données d'autorisation de paiement d'utilisateur étant configurées pour un décryptage par le processeur acquéreur.

8. Système selon la revendication 6, dans lequel les données de signal comprennent des données sonores configurées pour amener un dispositif de sortie audio du terminal POS à produire une onde sonore, dans lequel le au moins un ordinateur serveur est en outre programmé et/ou configuré pour déterminer qu'une plage de fréquences de l'onde sonore ne se chevauche pas avec une plage de fréquences d'une partie du deuxième profil sonore de l'environnement physique du dispositif de communication utilisateur (104).

9. Système selon l'une quelconque des revendications 6 à 8, dans lequel l'au moins un ordinateur serveur est en outre programmé et/ou configuré pour, en réponse à la réception de l'identifiant unique provenant du dispositif de communication utilisateur (104), communiquer au moins une partie des données de transaction au dispositif de communication utilisateur avant la réception des données d'autorisation de paiement utilisateur provenant du dispositif de communication utilisateur.

10. Système selon l'une quelconque des revendications 6 à 9, dans lequel l'au moins un ordinateur serveur est en outre programmé et/ou configuré pour, en réponse à la réception d'un accusé de réception provenant du processeur acquéreur de la transaction en cours d'achèvement conformément à la demande de transaction, communiquer un message de confirmation de transaction au dispositif de communication de commerçant du système de point de vente de commerçant (106) et/ou au dispositif de communication d'utilisateur (104).

11. Produit de programme informatique pour pour une authentification et un règlement de transaction à distance sécurisés, le produit de programme informatique comprenant l'au moins un support non transitoire lisible par ordinateur comprenant des instructions de programme qui, lorsqu'elles sont exécutées par l'au moins un processeur d'un système médiateur d'authentification (108), amènent l'au moins un processeur à réaliser un procédé de l'une quelconque des revendications 1 à 5.
